# EUROPÄISCHE PATENTSCHRIFT

(11) **EP 2 751 448 B1**
(45) Veröffentlichungstag und Bekanntmachung des Hinweises auf die Patenterteilung: **26.04.2017**
(21) Anmeldenummer: 12750793.7
(22) Anmeldetag: 29.08.2012
(51) Int. Cl.: F16H 59/02

(54) **SCHALTVORRICHTUNG**
SHIFTING DEVICE
DISPOSITIF DE CHANGEMENT DE VITESSE

(30) Priorität: 31.08.2011 DE 102011053177
(43) Veröffentlichungstag der Anmeldung: 09.07.2014
(73) Patentinhaber: ECS Engineered Control Systems AG, 9000 St. Gallen (CH)
(72) Erfinder: SCHIRMER, Heiko, 21649 Regesbostel (DE); YANG, Wei, Ruijin City Jiangxi (CN)
(74) Vertreter: Müller, Eckhard
(86) Internationale Anmeldenummer: PCT/EP2012/066774
(87) Internationale Veröffentlichungsnummer: WO 2013/030232

(56) Entgegenhaltungen:
- EP-A2- 1 452 782
- DE-A1- 19 600 526
- JP-A- 2000 177 422
- US-B1- 6 196 080

## Beschreibung

Die Erfindung betrifft eine Schaltvorrichtung für ein Getriebe eines Kraftfahrzeuges nach dem Oberbegriff des Patentanspruchs 1.

Aus der DE 102 52 009 B4 ist eine Schaltvorrichtung zur Übertragung von Schaltbefehlen an ein Automatikgetriebe bekannt. Die Schaltvorrichtung weist einen Schalthebel auf, der um eine Wählachse und um eine Schaltachse schwenkbar ausgeführt ist, wobei die Wählachse und die Schaltachse orthogonal zueinander angeordnet sind. Der Schalthebel kann zumindest in eine erste Schaltgasse oder in eine zweite Schaltgasse geschaltet werden, wobei die erste Schaltgasse Schaltpositionen (P, N, R und D) eines Automatikgetriebes schaltet und die zweite Schaltgasse manuelle Befehle umsetzt, wobei ein Schaltschlitten vorgesehen ist, der in einer Ebene lineare bewegbar gelagert ist und so ausgebildet ist, dass durch eine Kraftkopplung die Bewegung des Schalthebels in der ersten Schaltgasse eine lineare Verschiebung des Schaltschlittens bewirkt und durch eine Bewegung des Schalthebels in der zweiten Schaltgasse eine Entkopplung der Bewegung des Schalthebels vom Schaltschlitten bewirkt wird. Zur Fixierung des Schlittens ist ein Verriegelungselement an diesem angeordnet, das im Verriegelungszustand in ein Gehäuse und/oder einen Rahmen der Schaltvorrichtung eingreift. Das Verriegelungselement ist als Hebel ausgeführt, der einen Haken aufweist und in Ausnehmung Ende des Gehäuses und/oder des Rahmens eingreift.

Aus DE 102 22 671 A1 ist eine Wählvorrichtung für ein Getriebe bekannt. Die Wehrvorrichtung weist einen Wählhebel auf, der um einen fahrzeugfesten Lagerpunkt schwenkbar ist, wobei mit dem Wählhebel ein Schaltfinger und ein Sperrfinger verbunden ist. Der Wählhebel ist in einer fahrzeugfest angeordneten Schaltkulisse geführt, die eine Automatikschaltgasse und eine Schrittschaltgasse aufweist. Einzelne Schaltzustände in der Automatikschaltgasse sind durch Verschieben eines Schlittens anwählbar. Wenn sich der Wählhebel in der Schrittschaltgasse befindet, dann ist der Schlitten durch den Sperrfinger blockiert, wodurch eine unbeabsichtigte Anwahl eines Schaltzustandes der Automatikschaltgasse verhindert wird.

Aus DE 10 2008 022 447 ist eine Schaltvorrichtung für ein Automatikgetriebe bekannt. Die Schaltvorrichtung weist einen Wählhebel auf, der zum Auswählen von mehreren Schaltstellungen in einer Automatikgasse und in einer Manuellgasse sowie zum Wechseln zwischen der Automatikgasse und der Manuellgasse in einer Quergasse verstellbar ist. Us ist eine Rasteinrichtung vorgesehen, die den Schaltstellungen der Automatikgasse sowie der Mittelstellung der Manuellgasse stabile Raststellungen zuordnet, aus denen heraus der Wählhebel gegen Federkraft heraus bewegbar ist und in die hinein der Wählhebel mit Federkraft vorgespannt ist. Auch diese Schaltvorrichtung weist einen als Schlitten ausgebildeten Betätigungsschieber auf, der linear verschiebbar gelagert ist. Der Betätigungsschieber dient zum Betätigen eines Betätigungskabels. Die Schaltvorrichtung ist außerdem mit einem Sperrelement ausgestattet, das beim Herausbewegen eines Metnehmers des Wählhebels aus einer Mitnehmeraufnahme des Betätigungsschiebers formschlüssig in eine Aussparung eingreift, die am Betätigungsschieber ausgebildet ist und so den Betätigungsschieber gegen verstellen Bewegungen entlang seiner Längsführung sichert. Um beim Ausfahren des Mitnehmers aus der Mitnehmeraufnahme des Betätigungsschiebers ein Einrücken des Sperrelements in die Aussparung zu bewirken, ist eine Druckfeder vorgesehen, die das Sperrelement in Richtung auf den Betätigungsschieber vorspannt.

Aus WO 2009/021509 A1 ist eine Betätigungseinrichtung zur Übertragung von Schaltbefehlen an ein Automatikgetriebe eines Kraftfahrzeugs bekannt. Die Betätigungseinrichtung umfasst einen in einer Wählgasse zwischen einer Automatikschaltgasse und einer Sequenzschaltgasse bewegbaren Wählhebel, einen Schaltschlitten zur Weitergabe der Schaltbefehle an ein Getriebe-Übertragungselement, eine Trenneinrichtung zur Trennung der Kraftübertragung zwischen Wählhebel und Schaltschlitten sowie eine aktuatorische Sperreinrichtung zur Blockierung des Wählhebels in zumindest einer Wählhebelstellung. Die Betätigungseinrichtung zeichnet sich dadurch aus, dass die Sperreinrichtung zur Blockierung des Schaltschlittens eingerichtet ist, wobei der Schaltschlitten außer in den Shiftlock-Positionen zusätzlich in der mit der Wählgassenposition des Wählhebels korrespondierenden Position des Schaltschlittens blockierbar ist.

Aus EP 2 261 535 A1 ist eine Schalteinrichtung für ein in einem Fahrzeug bereitgestelltes automatisches Getriebe bekannt. Das Getriebe weist eine Kulissenplatte auf, die eine darin gebildete Hauptkulisse und eine Unterkulisse hat. Ein Schalthebel kann entlang der Hauptkulisse und der Unterkulisse bewegt werden. Es ist ein schwenkbares Umschaltglied vorgesehen, um von einem Schaltmodus in einen anderen zu schalten. An der Kulissenplatte ist ein Rastvorsprung vorhanden, der in eine Verriegelungsnut des Umschaltgliedes eingreifen kann, um dieses zu arretieren. Allerdings ist diese Art der Arretierung nicht sehr zuverlässig; zum anderen wirkt diese Schalteinrichtung bei dem Fahrer hakelig.

Aus der US 6,196080 B1, der EP 1 452 782 A2 und der DE 196 00 526 A1 sind verschiedene Vorrichtung nach dem Oberbegriff des Patentanspruchs 1 bekannt.

Es ist die Aufgabe der vorliegenden Erfindung eine Schaltvorrichtung der eingangs genannten Art anzugeben, die eine zuverlässige und störunanfällige Funktion des Übertragungsbauteil insbesondere nach oder bei einem Wechsel der Schaltgasse gewährleistet.

Die Aufgabe wird durch eine Schaltvorrichtung mit allen Merkmalen des patentanspruchs 1 gelöst.

Das Übertragungsbauteil ist dabei in einem Schaltgehäuse Schwenkbar gelagert, wobei wenigstens ein Zentriermittel, insbesondere ein Federelement, insbesondere ein Federbügel, vorgesehen ist, das das Übertragungsbauteil zwischen gegenüberliegenden Wänden des Schaltgehäuses, federnd zentriert. Hierdurch ist eine besonders ruckelfrei bedienbare und störungsunanfällige Ausführung der erfindungsgemäßen Schaltvorrichtung gegeben,

Das Übertragungsbauteil kann schwenkbar gelagert sein. Eine Schwenklagerung ist wesentlich einfacher und kostengünstiger realisierbar ist, als eine Linearlagerung. Darüber hinaus ist eine Schwenklagerung wesentlich zuverlässiger und langlebiger als eine Linearlagerung. Allerdings kann für besondere Anforderungen das Übertragungsbauteil auch anders als schwenkbar, beispielsweise auch linearverschiebbar, angeordnet sein.

Bei einer besonderen Ausführung einer erfindungsgemäßen Schaltvorrichtung ist das Übertragungsbauteil zur Betätigung des Schaltseilzuges oder des Schaltgestänges mittels des Betätigungshebels verschwenkbar ausgeführt.

Insbesondere hierzu kann vorteilhaft vorgesehen sein, dass der Betätigungshebel wenigstens einen Vorsprung aufweist, der in eine Ausnehmung des Übertragungsbauteils eingreift, wenn der Betätigungshebel in die erste Schaltgasse überführt ist und der außerhalb der Ausnehmung angeordnet ist, wenn der Betätigungshebel in die zweite Schaltgasse überführt ist. Alternativ oder zusätzlich kann auch vorgesehen sein, dass das Übertragungsbauteil wenigstens einen Vorsprung aufweist, der in eine Ausnehmung des Betätigungshebels eingreift, wenn der Betätigungshebel in die erste Schaltgasse überführt ist und der außerhalb der Ausnehmung angeordnet ist, wenn der Betätigungshebel in die zweite Schaltgasse überführt ist.

Bei einer besonderen Ausführung ist der Betätigungshebel zur Auswahl einer von mehreren Schaltstellungen, insbesondere einer der Schaltstellungen R, D, N, P, in der ersten Schaltgasse um eine erste Schwenkachse verschwenkbar. Alternativ oder zusätzlich kann vorgesehen sein, dass der Betätigungshebel in der zweiten Schaltgasse, insbesondere zur Anwahl von "+" zum Hochschalten oder zur Anwahl von "-" zum Herunterschalten, um eine zweite, insbesondere zur ersten Schwenkachse parallelen und/oder koaxialen, zweiten Schwenkachse verschwenkbar ist.

Der Betätigungshebel kann vorteilhaft zur Überführung von einer Schaltgasse in die andere Schaltgasse um eine Überführungsachse schwenkbar sein, die senkrecht zu einer Ebene angeordnet ist, in der die erste Schwenkachse und/oder die zweite Schwenkachse angeordnet ist. Alternativ oder zusätzlich kann vorgesehen sein, dass der Betätigungshebel zur Überführung von einer Schaltgasse in die andere Schaltgasse um eine Überführungsachse schwenkbar ist, die windschief zu der ersten Schwenkachse und/oder der zweite Schwenkachse angeordnet ist.

Bei einer vorteilhaften Ausführung sind das Übertragungsbauteil und der Betätigungshebel - wenigstens wenn der Betätigungshebel in die erste Schaltgasse überführt ist - um dieselbe Schwenkachse verschwenkbar gelagert. Alternativ oder zusätzlich kann vorgesehen sein, dass das Überlagerungsbauteil und der Betätigungshebel -wenigstens wenn der Betätigungshebel in die erste Schaltgasse überführt ist - um zueinander parallele Schwenkachsen verschwenkbar gelagert sind.

Bei einer besonders vorteilhaften Ausführung ist vorgesehen, dass die Schwenklagerung des Übertragungsbauteils zusätzlich auch als Schwenklagerung für den Betätigungshebel, wenigstens wenn diese in die erste Schaltgasse überführt ist, fungiert.

Besonders einfach und kostengünstig herstellbar ist eine Ausführung, bei der Übertragungsbauteil einen ersten Schwenkarm und einen zweiten Schwenkarm aufweist. Zusätzlich besonders zuverlässig und robust ist eine Ausführung, bei der das Übertragungsbauteil einen ersten Schwenkarm und einen zweiten Schwenkarm aufweist, wobei der Betätigungshebel zwischen dem ersten Schwenkarm und dem zweiten Schwenkarm angeordnet ist. Bei dieser Ausführung ist eine symmetrische Kraft- und/oder Drehmomentübertragung - wenigstens wenn der Betätigungshebel in die erste Schaltgasse überführt ist, gewährleistet, so dass die Gefahr eines Verkippens oder Verkantens weitgehend ausgeschlossen ist.

Insbesondere kann vorteilhaft vorgesehen sein, dass das Übertragungsbauteil einen ersten Schwenkarm und einen zweiten Schwenkarm aufweist, die mittels eines Verbindungsteils fest miteinander verbunden sind. Eine solche Lösung erlaubt insbesondere ein Realisierung der vorgenannten vorteilhaften Ausführungen in robuster und kostengünstiger Weise.

Bei einer besonders ruckelfrei bedienbaren und störungsunanfälligen Ausführung ist das Übertragungsbauteil relativ zu wenigstens einer Wand eines Schaltgehäuses verschwenkbar gelagert und gegen die Kraft wenigstens eines Federelements relativ zu der wenigstens einen Wand verschiebbar ist.

Bei einer besonderen Ausführung, weist das Arretiermittel ein Federelement auf oder ist als Federelement ausgebildet. Insbesondere kann vorgesehen sein, dass das Arretiermittel das Übertragungsbauteil derart festlegt, dass es keine Kräfte auf den Schaltzug bzw. das Schaltgestänge ausübt, solange der Betätigungshebel in die zweite Schaltgasse überführt ist und das das Übertragungsbauteil freigibt, wenn der Betätigungshebel in die erste überführt ist.

Bei einer besonderen Ausführung ist vorgesehen, dass der Betätigungshebel das Arretiermittel bedient.

Insbesondere kann auch vorgesehen sein, dass das Arretiermittel mit dem Betätigungshebel von einer Freigabestellung, in der das Übertragungsbauteil beweglich, insbesondere verschwenkbar, ist, in eine Verriegelungsstellung, in der das Arretiermittel das Übertragungsbauteil so blockiert, dass es nicht beweglich, insbesondere verschwenkbar ist, überführbar ist und/oder dass das Arretiermittel mit dem Betätigungshebel von einer Verriegelungsstellung, in der das Arretiermittel das Übertragungsbauteil so blockiert, dass es nicht beweglich, insbesondere verschwenkbar, ist, in eine Freigabestellung, in der das Übertragungsbauteil beweglich, insbesondere verschwenkbar, ist, überführbar ist.

Insbesondere kann das Federelement vorteilhaft - wenigstens teilweise - als Federzunge ausgebildet sein.

Bei einer vorteilhaften, einfachen und insbesondere daher zuverlässigen Ausführung weist der Betätigungshebel einen Betätigungsvorsprung auf, der das Arretiermittel - vorzugsweise gegen eine von ihm ausgehende Vorspannung - in einer Freigabestellung hält, in der das Übertragungsbauteil verschwenkbar ist, wenn der Betätigungshebel in die erste Schaltgasse überführt ist.

Darüber hinaus kann vorgesehen sein, dass sich der Betätigungsvorsprung von dem Arretiermittel entfernt und/oder einer Vorspannung des Arretiermittels nachgibt, um eine Verriegelungsbewegung des Arretiermittels zu ermöglichen. Außerdem kann vorteilhaft vorgesehen sein, dass der Betätigungsvorsprung in die Freigabestellung bewegt, wenn der Betätigungshebel von der ersten Schaltgasse in die zweite Schaltgasse überführt wird.

In vorteilhafter Weise kann das Arretiermittel, insbesondere wenigstens ein Ende des Arretiermittels, an dem Übertragungsbauteil befestigt sein.

Insbesondere kann vorteilhaft vorgesehen sein, dass das Arretiermittel an dem Übertragungsbauteil - beispielsweise mit einem Ende - angeordnet und - beispielsweise mit einem anderen Ende - in eine Arretieraufnahme eines Schaltrahmens oder Schaltgehäuses eingreift, wenn der Betätigungshebel in die zweite Schaltgasse überführt ist und nicht in die Arretieraufnahme eingreift, wenn der Betätigungshebel in die erste Schaltgasse überführt ist.

Es kann natürlich auch umgekehrt vorgesehen sein, dass das Arretiermittel an einem relativ einem Kraftfahrzeug ortsfesten Schaltrahmen oder Schaltgehäuse angeordnet ist und in eine Arretieraufnahme des Übertragungsbauteils eingreift, wenn der Betätigungshebel in die zweite Schaltgasse überführt ist und das Arretiermittel nicht in die Arretieraufnahme eingreift, wenn der Betätigungshebel in die erste Schaltgasse überführt ist.

Bei einer vorteilhaften Ausführung ist vorgesehen, dass ein Ende des Arretiermittels fest an dem Übertragungsbauteil angeordnet ist, während ein gegenüberliegendes Ende des Arretiermittels dazu bestimmt ist, in eine Arretieraufnahme eines Schaltrahmens oder eines Schaltgehäuses einzugreifen. Es kann natürlich auch umgekehrt vorgesehen sein, dass ein Ende des Arretiermittels fest an einem Schaltrahmen oder einem Schaltgehäuse angeordnet ist, während ein gegenüberliegendes Ende des Arretiermittels ist dazu bestimmt ist, in eine Arretieraufnahme des Übertragungsbauteils einzugreifen.

Bei einer besonders vorteilhaften Ausführung ist die Verschwenkbarkeit des Übertragungsbauteils blockiert, wenn der Betätigungshebel in die zweite Schaltgasse überführt ist, und freigegeben, wenn der Betätigungshebel in die erste Schaltgasse überführt ist.

An dem Übertragungsbauteil kann vorteilhaft ein Schaltseilzug oder ein Schaltgestänge zum mechanischen Übertragen von Schaltbefehlen befestigt sein. Beispielsweise kann das Übertragungsbauteil einen Ankoppelpunkt für einen Schaltseilzug oder ein Schaltgestänge aufweisen.

Besonders vorteilhaft ist ein Getriebe, insbesondere Automatikgetriebe, für ein Kraftfahrzeug und/oder ein Kraftfahrzeug, das mit einer erfindungsgemäßen Schaltvorrichtung ausgerüstet ist.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: eine Detailansicht einer erfindungsgemäßen Schaltvorrichtung, bei der der Betätigungshebel in eine erste Schaltgasse überführt ist,
- Fig. 2: eine Detailansicht einer erfindungsgemäßen Schaltvorrichtung, bei der der Betätigungshebel in eine 2. Schaltgasse überführt ist,
- Fig. 3: eine Detailansicht eines Übertragungsbauteils einer erfindungsgemäßen Schaltvorrichtung und
- Fig. 4: eine andere Detailansicht des Übertragungsbauteils.

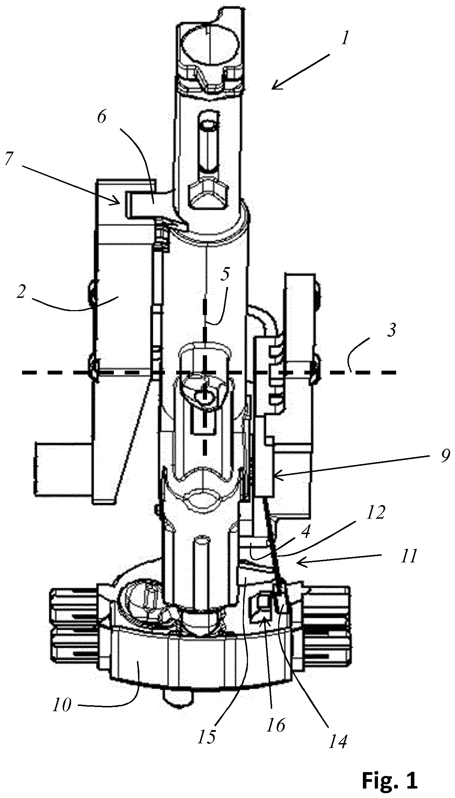

Figur 1 zeigt eine Detailansicht einer erfindungsgemäßen Schaltvorrichtung für ein Getriebe eines Kraftfahrzeuges. Die Schaltvorrichtung weist einen Betätigungshebel 1 auf, der wahlweise in eine erste Schaltgasse, insbesondere eine Automatikschaltgasse bspw. zur Auswahl einer der Schaltstellungen R, D, N, P oder in eine zweite Schaltgasse, insbesondere zur Anwahl von "+" zum Hochschalten oder zur Anwahl von "-" zum Herunterschalten, überführbar ist.

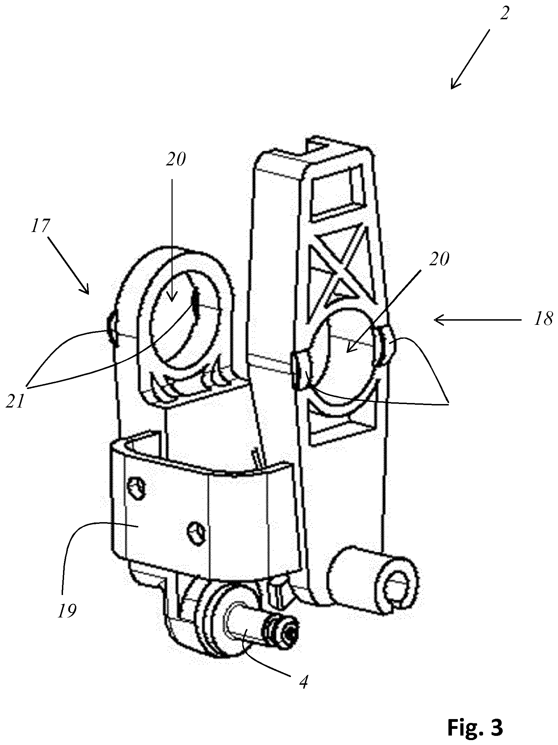

Bei der in Figur 1 dargestellten Detailansicht befindet sich der Betätigungshebel 1 in der ersten Schaltgasse. In dieser Stellung ist der Betätigungshebel 1 mit einem Übertragungsbauteil 2 mechanisch verkoppelt. Dies derart, dass das Übertragungsbauteil 2 zur Betätigung eines in dieser Ansicht nicht sichtbaren Seilzuges oder eines Schaltgestänges mit dem Betätigungshebel verschwenkt werden kann. Eine Verschwenkung zur Anwahl einer von mehreren Schaltstellungen in der ersten Schaltgasse erfolgt durch Verschwenken des Betätigungshebels 1 - und damit auch des Übertragungsbauteils 2 - in einer zur Zeichenebene senkrechten Ebene, nämlich durch Verschwenken um eine Schwenkachse 3. Das Übertragungsbauteil 2 weist zur Ankopplung eines Schaltseilzuges eine Ankoppelnase 4 auf, die in dieser Figur nur teilweise zu sehen ist. Die Ankoppelnase ist in Figur 3 deutlich zu erkennen.

Zur Überführung des Betätigungshebels 1 in die zweiten Schaltgasse wird dieser um eine Überführungsachse 5 verschwenkt. Die Überführungsachse 5 ist senkrecht zu einer Ebene angeordnet, in der sich die Schwenkachse 3 befindet. Darüber hinaus ist die Überführungsachse 5 aus Sicht des Bedienendes des Betätigungshebels 1 oberhalb der Schwenkachse 3 angeordnet.

Der Betätigungshebel weist einen ersten Vorsprung 6 auf, der in eine erste Ausnehmung 7 des Übertragungsbauteils 2 eingreift, wenn der Betätigungshebel 1 sich in der ersten Schaltgasse befindet. Darüber hinaus weist der Betätigungshebel 1 einen zweiten Vorsprung 8 auf, der in eine zweiten Ausnehmung 9 des Übertragungsbauteils 2 eingreift, wenn der Betätigungshebel 1 in die erste Schaltgasse überführt ist. Auf diese Weise ist sichergestellt, dass das Übertragungsbauteil zur Betätigung des Seilzuges bzw. eines Schaltgestänges mit Hilfe des Betätigungshebels verschwenkt werden kann. Der Betätigungshebel 1 und das Übertragungsbauteil 2 sind - wenn sich der Betätigungshebel in der ersten Schaltgasse befindet - gemeinsam um dieselbe Schwenkachse 3 schwenkbar gelagert. Wenn der Betätigungshebel 1 in die zweite Schaltgasse überführt wird, wird das Betätigungsbauteil 2 relativ zu einem - vorzugsweise relativ zu einem Kraftfahrzeug ortsfesten - Schaltrahmen 10, von dem hier lediglich ein Teil zu sehen ist, mittels eines besonderen Arretiermittels 11 festgelegt und damit die Verschwenkbarkeit aufgehoben. Wenn sich der Betätigungshebel 1 in der zweiten Schaltgasse befindet, kann dieser, insbesondere zum manuellen Hoch- oder Herunterschalten, jedoch weiterhin um die Schwenkachse 3 verschwenkt werden.

Das Arretiermittel 11 ist als Federelement 12, nämlich als Federzunge, ausgebildet. Ein erstes Ende 13 des Arretiermittels 11 ist fest mit dem Übertragungsbauteil 2 verbunden. Das gegenüberliegende zweite Ende 14 des Arretiermittels 11 endet frei und wird von einem Betätigungsvorsprungs 15 des Betätigungshebels 1 gegen eine vom Federelement 12 ausgehende Vorspannung in einer Freigabestellung gehalten.

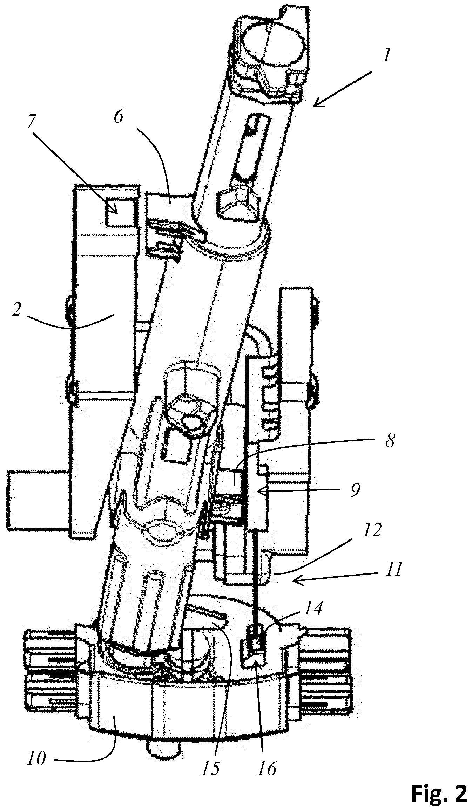

Sobald der Betätigungshebel 1 in die zweite Schaltgasse überführt wird, bewegt sich der Betätigungsvorsprung 15 von dem Arretiermittel 11 derart weg, dass das zweite Ende des Arretiermittels 14 in eine Arretieraufnahme 16 des Schaltrahmens 10 eingreifen kann. Hierdurch wird die Verschwenkbarkeit des Übertragungsbauteils 2 um die Schwenkachse 3 blockiert. Dies ist in Figur 2 dargestellt.

Figur 2 zeigt auch deutlich, dass der erste Vorsprung 6 und der zweite Vorsprung 8 in Bezug auf die Ausnehmungen 7 und 9 außer Eingriff stehen, wenn der Betätigungshebel 1 in die zweite Schaltgasse überführt ist. Dies ermöglicht es, dass der Betätigungshebel 1 - obwohl das Übertragungsbauteil 2 mittels des Arretiermittels 11 festgelegt ist - um die Schwenkachse 3 zum Hoch- oder Herunterschalten verwenkbar ist.

Wenn der Betätigungshebel 1 von der zweiten Schaltgasse zurück in die erste Schaltgasse überführt wird, drückt der Betätigungsvorsprung 15 das Arretiermittel 11 aus der Arretieraufnahme 16. Gleichzeitig greifen die Vorsprünge 6 und 8 des Betätigungshebels 1 in die zugehörigen Ausnehmungen 7 und 9 des Übertragungsbauteils 2 ein, so dass mit Hilfe des Betätigungshebels 1 der Schaltseilzug bzw. das Schaltgestänge wieder betätigt werden kann.

Figur 3 zeigt das Übertragungsbauteil 2. Dieses ist mehrteilig ausgeführt und weist einen ersten Schwenkarm 17 und einen zweiten Schwenkarm 18 auf, wobei der erste Schwenkarm 17 und der zweite Schwenkarm 18 mittels eines Bügels 19 fest miteinander verbunden sind. Die Schwenkarme 17 und 18 weisen jeweils eine Öffnung 20 zur Schwenklagerung des Übertragungsbauteils 2 auf.

Der erste Schwenkarm 17 trägt an seinem unteren Ende eine Ankoppelstelle 4 zum Befestigen eines Seilzugs oder eines Schaltgestänges.

Jeder der Schwenkarme 17, 18 weist auf jeweils einer nach außen gerichteten Seite im Bereich der Öffnungen 20 Federbügel 21 auf, die es ermöglichen, das Übertragungsbauteil 2 zwischen zwei Wänden eines Schaltrahmens oder eines Schaltgehäuses derart schwenkbar anzuordnen, dass keine der Federarme an den Innenseiten des Schaltrahmens oder des Schaltgehäuses schleift. Vielmehr bilden die Federbügel 21 Zentriermittel, die das Übertragungsbauteil 2 so zwischen gegenüberliegenden Wänden eines Schaltgehäuses oder eines Schaltrahmens zentrieren, dass lediglich die Federbügel die Wänden berühren.

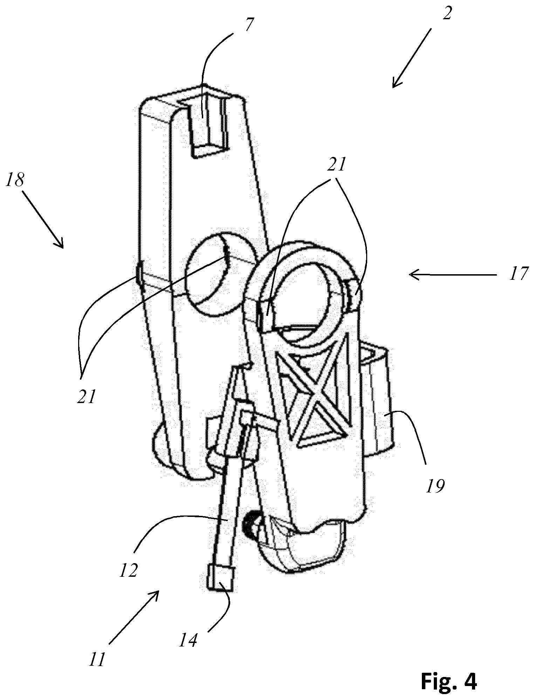

Figur 4 zeigt das Übertragungsbauteil 2, an dem das als Federzunge 12 ausgebildete Arretiermittel 11 befestigt ist.

### Bezugszeichenliste

- 1: Betätigungshebel
- 2: Übertragungsbauteil
- 3: Schwenkachse
- 4: Ankoppelstelle
- 5: Überführungsachse
- 6: Erster Vorsprung
- 7: Erste Ausnehmung
- 8: Zweiter Vorsprung
- 9: Zweite Ausnehmung
- 10: Schaltrahmen
- 11: Arretiermittel
- 12: Federzunge
- 13: Erstes Ende
- 14: Zweites Ende
- 15: Betätigungsvorsprung
- 16: Arretieraufnahme
- 17: Erster Schwenkarm
- 18: Zweiter Schwenkarm
- 19: Bügel
- 20: Öffnungen
- 21: Federbügel

## Patentansprüche

1. Schaltvorrichtung für ein Getriebe eines Kraftfahrzeuges, mit einem Betätigungshebel (1), der wahlweise in eine erste Schaltgasse, insbesondere eine Automatikschaltgasse, überführbar ist, in der er mit einem Übertragungsbauteil (2) zur Betätigung eines Schaltseilzuges oder eines Schaltgestänges mechanisch verkoppelt ist, oder eine zweite Schaltgasse, insbesondere eine Sequenzschaltgasse, überführbar ist, in der er von dem Übertragungsbauteil (2) entkoppelt ist, wobei das Übertragungsbauteil (2) beweglich gelagert ist und ein Arretiermittel (11) vorgesehen ist, mit dem das Übertragungsbauteil (2) derart festlegbar ist, dass es keine Kräfte auf den Schaltzug bzw. das Schaltgestänge ausübt, solange der Betätigungshebel (1) in die zweite Schaltgasse überführt ist und das das Übertragungsbauteil (2) dadurch freigibt, dass der Betätigungshebel (1) in die erste Schaltgasse überführt wird, wobei das Übertragungsbauteil (2) in einem- vorzugsweise ortsfest in einem Kraftfahrzeug angeordneten oder anordenbaren -Schaltgehäuse schwenkbar gelagert ist, **dadurch gekennzeichnet, dass** wenigstens ein Zentriermittel, insbesondere ein Federelement, insbesondere ein Federbügel (21), vorgesehen ist, das das Übertragungsbauteil (2) zwischen gegenüberliegenden Wänden des Schaltgehäuses, federnd zentriert.

2. Schaltvorrichtung nach Anspruch 1, **dadurch gekennzeichnet, dass** der Betätigungshebel das Arretiermittel bedient.

3. Schaltvorrichtung nach Anspruch 1 oder 2, **dadurch gekennzeichnet, dass**
a. das Arretiermittel mit dem Betätigungshebel von einer Freigabestellung, in der das Übertragungsbauteil (2) beweglich, insbesondere verschwenkbar, ist, in eine Verriegelungsstellung, in der das Arretiermittel das Übertragungsbauteil (2) so blockiert, dass es nicht beweglich, insbesondere verschwenkbar ist, überführbar ist und/oder dass
b. das Arretiermittel mit dem Betätigungshebel von einer Verriegelungsstellung, in der das Arretiermittel das Übertragungsbauteil (2) so blockiert, dass es nicht beweglich, insbesondere verschwenkbar, ist, in eine Freigabestellung, in der das Übertragungsbauteil (2) beweglich, insbesondere verschwenkbar, ist, überführbar ist.

4. Schaltvorrichtung nach einem der Ansprüche 1 bis 3, **dadurch gekennzeichnet, dass**
a. das Arretiermittel ein Federelement aufweist und/oder dass
b. das Arretiermittel ein Federelement aufweist, das als Federzunge (12) ausgebildet ist.

5. Schaltvorrichtung nach Anspruch 1 bis 4, **dadurch gekennzeichnet, dass** der Betätigungshebel (1) einen Betätigungsvorsprung (15) aufweist, der das Arretiermittel (11) - vorzugsweise gegen eine von einem Federelement ausgehende Vorspannung - in einer Freigabestellung hält, in der das Übertragungsbauteil (2) beweglich ist, wenn der Betätigungshebel (1) in die erste Schaltgasse überführt ist.

6. Schaltvorrichtung nach einem der Ansprüche 1 bis 5, **dadurch gekennzeichnet, dass**
a. das Arretiermittel (11) an dem Übertragungsbauteil (2) angeordnet ist und in eine Arretieraufnahme (16) eines Schaltrahmens (10) oder Schaltgehäuses eingreift, wenn der Betätigungshebel (1) in die zweite Schaltgasse überführt ist und dass das Arretiermittel (11) nicht in die Arretieraufnahme (16) eingreift, wenn der Betätigungshebel (1) in die erste Schaltgasse überführt ist und/oder dass
b. das Arretiermittel (11) an einem Schaltrahmen (10) oder Schaltgehäuse angeordnet ist und in eine Arretieraufnahme (16) des Übertragungsbauteils (2) eingreift, wenn der Betätigungshebel (1) in die zweite Schaltgasse überführt ist und dass das Arretiermittel (11) nicht in die Arretieraufnahme (16) eingreift, wenn der Betätigungshebel (1) in die erste Schaltgasse überführt ist.

7. Schaltvorrichtung nach einem der Ansprüche 1 bis 6, **dadurch gekennzeichnet, dass**
a. ein Ende (13) des Arretiermittels (11) fest an dem Übertragungsbauteil (2) angeordnet ist, während ein gegenüberliegendes Ende (14) des Arretiermittels (11) dazu bestimmt ist, in eine Arretieraufnahme (16) eines - vorzugsweise ortsfest in einem Kraftfahrzeug angeordneten oder anordenbaren - Schaltrahmens (10) oder eines Schaltgehäuses einzugreifen oder dass
b. ein Ende (13) des Arretiermittels (11) fest an einem - vorzugsweise ortsfest in einem Kraftfahrzeug angeordneten oder anordenbaren - Schaltrahmen oder einem Schaltgehäuse angeordnet ist, während ein gegenüberliegendes Ende (14) des Arretiermittels (11) ist dazu bestimmt ist, in eine Arretieraufnahme (16) des Übertragungsbauteils (2) einzugreifen.

8. Schaltvorrichtung nach einem der Ansprüche 1 bis 7, **dadurch gekennzeichnet, dass**
a. das Übertragungsbauteil (2) zur Betätigung des Schaltseilzuges oder des Schaltgestänges, insbesondere mit dem Betätigungshebel (1), verschwenkbar angeordnet ist oder dass
b. das Übertragungsbauteil (2) zur Betätigung des Schaltseilzuges oder des Schaltgestänges, insbesondere mit dem Betätigungshebel (1), linear verschiebbar angeordnet ist.

9. Schaltvorrichtung nach einem der Ansprüche 1 bis 8, **dadurch gekennzeichnet, dass** der Betätigungshebel (1) zur Auswahl einer von mehreren Schaltstellungen, insbesondere einer der Schaltstellungen R, D, N, P, in der ersten Schaltgasse um eine erste Schwenkachse (3) verschwenkbar ist und/oder dass der Betätigungshebel (1) in der zweiten Schaltgasse, insbesondere zur Anwahl von "+" zum Hochschalten oder zur Anwahl von "-" zum Herunterschalten, um eine zweite, insbesondere zur ersten Schwenkachse (3) parallelen und/oder koaxialen, zweiten Schwenkachse (3) verschwenkbar ist.

10. Schaltvorrichtung nach Anspruch 9, **dadurch gekennzeichnet, dass**
a. der Betätigungshebel (1) zur Überführung von einer Schaltgasse in die andere Schaltgasse um eine Überführungsachse (5) schwenkbar ist, die senkrecht zu einer Ebene angeordnet ist, in der die erste Schwenkachse (3) und/oder die zweite Schwenkachse (3) angeordnet ist und/oder dass
b. der Betätigungshebel (1) zur Überführung von einer Schaltgasse in die andere Schaltgasse um eine Überführungsachse (5) schwenkbar ist, die senkrecht zu einer Ebene angeordnet ist, in der die erste Schwenkachse (3) und/oder die zweite Schwenkachse (3) angeordnet ist, wobei der Betätigungshebel das Arretiermittel bedient, wenn er um die Überführungsachse (5) verschwenkt wird, und/oder dass
c. der Betätigungshebel (1) zur Überführung von einer Schaltgasse in die andere Schaltgasse um eine Überführungsachse (5) schwenkbar ist, die windschief zu der ersten Schwenkachse (3) und/oder der zweite Schwenkachse (3) angeordnet ist.

11. Schaltvorrichtung nach einem der Ansprüche 1 bis 10, **dadurch gekennzeichnet, dass**
a. der Betätigungshebel (1) wenigstens einen Vorsprung (6) aufweist, der in eine Ausnehmung (9) des Übertragungsbauteils (2) eingreift, wenn der Betätigungshebel (1) in die erste Schaltgasse überführt ist und der außerhalb der Ausnehmung (9) angeordnet ist, wenn der in die zweite Schaltgasse überführt ist und/oder
b. das das Übertragungsbauteil (2) wenigstens einen Vorsprung (6) aufweist, der in einer Ausnehmung (9) des Betätigungshebels (1) eingreift, wenn der Betätigungshebel (1) in die erste Schaltgasse überführt ist und der außerhalb der Ausnehmung (9) angeordnet ist, wenn der Betätigungshebel (1) in die zweite Schaltgasse überführt ist.

12. Schaltvorrichtung nach Anspruch 1 bis 11, **dadurch gekennzeichnet, dass** das Übertragungsbauteil (2) und der Betätigungshebel (1) - wenigstens wenn der Betätigungshebel (1) in die erste Schaltgasse überführt ist - um dieselbe Schwenkachse (3) verschwenkbar gelagert sind und/oder dass das Überlagerungsbauteil und der Betätigungshebel (1) - wenigstens wenn der Betätigungshebel (1) in die erste Schaltgasse überführt ist - um zueinander parallele Schwenkachsen (3) verschwenkbar gelagert sind.

13. Schaltvorrichtung nach einem der Ansprüche 1 bis 12, **dadurch gekennzeichnet, dass** eine Schwenklagerung des Übertragungsbauteils (2) zusätzlich auch als Schwenklagerung für den Betätigungshebel (1), wenigstens wenn diese in die erste Schaltgasse überführt ist, fungiert.

14. Schaltvorrichtung nach einem der Ansprüche 1 bis 13, **dadurch gekennzeichnet, dass** das Übertragungsbauteil (2) einen ersten Schwenkarm (17) und einen zweiten Schwenkarm (18) aufweist und/oder dass das Übertragungsbauteil (2) einen ersten Schwenkarm (17) und einen zweiten Schwenkarm (18) aufweist, wobei der Betätigungshebel (1) zwischen dem ersten Schwenkarm (17) und dem zweiten Schwenkarm (18) angeordnet ist und/oder dass das Übertragungsbauteil (2) einen ersten Schwenkarm (17) und einen zweiten Schwenkarm (18) aufweist, die mittels eines Verbindungsteils fest miteinander verbunden sind.

15. Schaltvorrichtung nach einem der Ansprüche 1 bis 14, **dadurch gekennzeichnet, dass** das Übertragungsbauteil (2) relativ zu wenigstens einer Wand eines - vorzugsweise ortsfest in einem Kraftfahrzeug angeordneten oder anordenbaren - Schaltgehäuses verschwenkbar gelagert und gegen die Kraft wenigstens eines Federelements relativ zu der wenigstens einen Wand verschiebbar ist.

16. Schaltvorrichtung nach einem der Ansprüche 1 bis 15, **dadurch gekennzeichnet, dass** die Beweglichkeit, insbesondere Verschwenkbarkeit, des Übertragungsbauteils (2) blockiert ist, wenn der Betätigungshebel (1) in die zweite Schaltgasse überführt ist und dass die Beweglichkeit, insbesondere Verschwenkbarkeit, des Übertragungsbauteils (2) ermöglicht ist, wenn der in die erste Schaltgasse überführt ist.

17. Schaltvorrichtung nach einem der Ansprüche 1 bis 16, **dadurch gekennzeichnet, dass** an dem Übertragungsbauteil (2) ein Schaltseilzug oder ein Schaltgestänge befestigt ist.

18. Getriebe, insbesondere Automatikgetriebe, eines Kraftfahrzeuges und/oder Kraftfahrzeug mit einer Schaltvorrichtung nach einem der Ansprüche 1 bis 17.

## Claims

1. Shifting device for a gear of a motor vehicle, having an actuation lever (1) that can optionally be transferred into a first shifting gate, in particular an automatic shifting gate, in which it is mechanically coupled to a transmission component (2) for actuating a shift cable control or a gear shift linkage, or can be transferred into a second shifting gate, in particular a sequence shifting gate, in which it is decoupled from the transmission component (2), wherein the transmission component (2) is pivotably mounted and a locking means (11) is provided by means of which the transmission component (2) can be fixated in such a manner that it does not exert any forces on the shift cable control or the gear shift linkage as long as the actuation lever (1) is transferred into the second shifting gate and releases the transmission component (2) in such a manner that the actuation lever (1) is transferred into the first shifting gate, wherein the transmission component (2) is mounted in a pivotable manner in the switching housing, preferably one that is arranged or can be arranged inside a motor vehicle in a stationary manner, **characterized in that** at least one centering means, in particular a spring element, in particular a spring bow (21), is provided, which centers the transmission component (2) in a springloaded manner between facing walls of the switching housing.

2. Shifting device according to claim 1, **characterized in that** the actuation lever operates the locking means.

3. Shifting device according to claim 1 or 2, **characterized in that**
a. the locking means can be transferred with the actuation lever (1) from a release position in which the transmission component (2) is moveable, in particular pivotable, into a locking position in which the locking means blocks the transmission component (2) in such a manner that it is not movable, in particular not pivotable, and/or that
b. the locking means can be transferred with the actuation lever from a locking position in which the locking means blocks the transmission component (2) in such a manner that it is not moveable, in particular not pivotable, into a release position in which the transmission component (2) is movable, in particular pivotable.

4. Shifting device according to one of the claims 1 to 3, **characterized in that**
a. the locking means has a spring element, and/or that
b. the locking means has a spring element that is formed as a spring tongue (12).

5. Shifting device according to claim 1 to 4, **characterized in that** the actuation lever (1) has an actuation projection (15) that retains the locking means (11) - preferably against a preload exerted by the spring element - in a release position in which the transmission component (2) is moveable when the actuation lever (1) is transferred into the first shifting gate.

6. Shifting device according to one of the claims 1 to 5, **characterized in that**
a. the locking means (11) is arranged at a transmission component (2) and meshes with a locking reception (16) of a switching frame (10) or switching housing when the actuation lever (1) is transferred into the second shifting gate, and **in that** the locking means (11) does not mesh with the locking reception (16) when the actuation lever (1) is transferred into the first shifting gate, and/or that
b. the locking means (11) is arranged at a switching frame (10) or switching housing and meshes with a locking reception (16) of the transmission component (2) when the actuation lever (1) is transferred into the second shifting gate, and **in that** the locking means (11) does not mesh with the locking reception (16) when the actuation lever (1) is transferred into the first shifting gate.

7. Shifting device according to one of the claims 1 to 6, **characterized in that**
a. an end (13) of the locking means (11) is fixedly arranged at the transmission component (2), while a facing end (14) of the locking means (11) is configured for meshing with a locking reception (16) of a switching frame (10) or a switching housing, preferably one that is arranged or can be arranged inside a motor vehicle in a stationary manner, or that
b. an end (13) of the locking means (11) is fixedly arranged at a switching frame or a switching housing, preferably one that is arranged or can be arranged inside a motor vehicle in a stationary manner, while a facing end (14) of the locking means (11) is configured for meshing with a locking reception (16) of the transmission component (2).

8. Shifting device according to one of the claims 1 to 7, **characterized in that**
a. the transmission component (2) is arranged in a pivotable manner for actuating the shift cable control or the gear shift linkage, in particular with the actuating lever (1), or that
b. the transmission component (2) is arranged in a linearly displaceable manner for actuating the shift cable control or the gear shift linkage, in particular with the actuating lever (1).

9. Shifting device according to one of the claims 1 to 8, **characterized in that** the actuation lever (1) can be pivoted in the first shifting gate about a first pivot axis (3) for selecting one of multiple switching positions, in particular one of the switching positions R, D, N, P, and/or **in that** the actuation lever (1) can be pivoted in the second shifting gate about a second pivot axis (3), in particular one that is parallel and/or coaxial to the first pivot axis (3), in particular for selecting "+" for upshifting or for selecting "-" for downshifting.

10. Shifting device according to claim 9, **characterized in that**
a. for the purpose of being transferred from one shifting gate into another shifting gate, the actuation lever (1) can be pivoted about a transfer axis (5) that is arranged perpendicularly to a plane in which the first pivot axis (3) and/or the second pivot axis (3) are arranged, and/or that
b. for the purpose of being transferred from one shifting gate into another shifting gate, the actuation lever (1) can be pivoted about a transfer axis (5) that is arranged perpendicularly to a plane in which the first pivot axis (3) and/or the second pivot axis (3) are arranged, wherein the actuation lever operates the locking means when it is pivoted about the transfer axis (5), and/or that
c. for the purpose of being transferred from one shifting gate into another shifting gate, the actuation lever (1) can be pivoted about a transfer axis (5) that is arranged in a skewed manner with respect to the first pivot axis (3) and/or the second pivot axis (3).

11. Shifting device according to one of the claims 1 to 10, **characterized in that**
a. the actuation lever (1) has at least one projection (6) that meshes with a recess (9) of the transmission component (2) when the actuation lever (1) is transferred into the first shifting gate, and that is arranged outside of the recess (9) when the actuation lever (1) is transferred into the second shifting gate, and/or
b. the transmission component (2) has at least one projection (6) that meshes with a recess (9) of the actuation lever (1) when the actuation lever (1) is transferred into the first shifting gate, and that is arranged outside of the recess (9) when the actuation lever (1) is transferred into the second shifting gate.

12. Shifting device according claim 1 to 11, **characterized in that** - at least when the actuation lever (1) is transferred into the first shifting gate - the transmission component (2) and the actuation lever (1) are mounted so as to be pivotable about the same pivot axis (3, and/or that - at least when the actuation lever (1) is transferred into the first shifting gate - the transmission component and the actuation lever (1) are mounted so as to be pivotable about pivot axes (3) that are parallel to each other.

13. Shifting device according to one of the claims 1 to 12, **characterized in that** the pivot bearing of the transmission component (2) additionally also functions as a pivot bearing for the actuation lever (1) at least when it is transferred into the first shifting gate.

14. Shifting device according to one of the claims 1 to 13, **characterized in that** the transmission component (2) has a first swivel arm (17) and a second swivel arm (18), and/or **in that** the transmission component (2) has a first swivel arm (17) and a second swivel arm (18), wherein the actuation lever (1) is arranged between the first swivel arm (17) and the second swivel arm (18), and/or that the transmission component (2) has a first swivel arm (17) and a second swivel arm (18) that are fixedly connected to each other by means of a connection part.

15. Shifting device according to one of the claims 1 to 14, **characterized in that** the transmission component (2) is mounted in a pivotable manner relative to at least one wall of a switching housing, preferably one that is arranged or can be arranged inside a motor vehicle in a stationary manner, and **in that** it can be displaced against the force of at least one spring element relative to the at least one wall.

16. Shifting device according to one of the claims 1 to 15, **characterized in that** the movability, in particular the pivotability, of the transmission component (2) is blocked when the actuation lever (1) is transferred into the second shifting gate, and **in that** the movability, in particular the pivotability, of the transmission component (2) is facilitated when the actuation lever (1) is transferred into the first shifting gate.

17. Shifting device according to one of the claims 1 to 16, **characterized in that** a shift cable control or a gear shift linkage is attached at the transmission component (2).

18. Gear, in particular automatic gear box, of a motor vehicle and/or motor vehicle with a shifting device according to one of the claims 1 to 17.

## Revendications

1. Dispositif de changement de vitesses pour une boîte de vitesses d'un véhicule automobile, comprenant un levier d'actionnement (1) qui peut être transféré au choix dans une première voie de changement de vitesses, en particulier une voie de changement de vitesses automatiques, dans laquelle il est accouplé mécaniquement à un composant de transfert (2) pour actionner un câble de changement de vitesses ou une tringlerie de changement de vitesses, ou une deuxième voie de changement de vitesses, en particulier une voie de changement de vitesses séquentielle, dans laquelle il est désaccouplé du composant de transfert (2), le composant de transfert (2) étant supporté de manière déplaçable et un moyen d'arrêt (11) étant prévu, avec lequel le composant de transfert (2) peut être fixé de telle sorte qu'il n'exerce aucune force sur le câble de changement de vitesses ou la tringlerie de changement de vitesses tant que le levier d'actionnement (1) est transféré dans la deuxième voie de changement de vitesses et qui libère le composant de transfert (2) par le fait que le levier d'actionnement (1) est transféré dans la première voie de changement de vitesses, le composant de transfert (2) étant supporté de manière à pouvoir pivoter dans un boîtier de changement de vitesses disposé ou pouvant être disposé de préférence de manière fixée dans un véhicule automobile, **caractérisé en ce qu'**il est prévu au moins un moyen de centrage, en particulier un élément de ressort, en particulier un étrier à ressort (21) qui centre de manière supportée par ressort le composant de transfert (2) entre des parois opposées du boîtier de changement de vitesses.

2. Dispositif de changement de vitesses selon la revendication 1, **caractérisé en ce que** le levier d'actionnement commande le moyen d'arrêt.

3. Dispositif de changement de vitesses selon la revendication 1 ou 2, **caractérisé en ce que**
a. le moyen d'arrêt peut être transféré avec le levier d'actionnement d'une position de libération dans laquelle le composant de transfert (2) est déplaçable, en particulier peut pivoter, dans une position de verrouillage dans laquelle le moyen d'arrêt bloque le composant de transfert (2) de telle sorte qu'il ne soit pas déplaçable, en particulier qu'il ne puisse pas pivoter, et/ou **en ce que**
b. le moyen d'arrêt peut être transféré avec le levier d'actionnement d'une position de verrouillage dans laquelle le moyen d'arrêt bloque le composant de transfert (2) de telle sorte qu'il ne soit pas déplaçable, en particulier qu'il ne puisse pas pivoter, dans une position de libération dans laquelle le composant de transfert (2) est déplaçable, en particulier peut pivoter.

4. Dispositif de changement de vitesses selon l'une quelconque des revendications 1 à 3, **caractérisé en ce que**
a. le moyen d'arrêt présente un élément de ressort et/ou **en ce que**
b. le moyen d'arrêt présente un élément de ressort qui est réalisé sous forme de langue à ressort (12).

5. Dispositif de changement de vitesses selon les revendications 1 à 4, **caractérisé en ce que** le levier d'actionnement (1) présente une saillie d'actionnement (15) qui maintient le moyen d'arrêt (11) - de préférence à l'encontre d'une précontrainte issue d'un élément de ressort - dans une position de libération dans laquelle le composant de transfert (2) est déplaçable, lorsque le levier d'actionnement (1) est transféré dans la première voie de changement de vitesses.

6. Dispositif de changement de vitesses selon l'une quelconque des revendications 1 à 5, **caractérisé en ce que**
a. le moyen d'arrêt (11) est disposé en le composant de transfert (2) et vient en prise dans un logement d'arrêt (16) d'un cadre de changement de vitesses (10) ou du boîtier de changement de vitesses, lorsque le levier d'actionnement (1) est transféré dans la deuxième voie de changement de vitesses et **en ce que** le moyen d'arrêt (11) ne vient pas en prise dans le logement d'arrêt (16) lorsque le levier d'actionnement (1) est transféré dans la première voie de changement de vitesses et/ou en ce que
b. le moyen d'arrêt (11) est disposé en un cadre de changement de vitesses (10) ou en le boîtier de changement de vitesses et vient en prise dans un logement d'arrêt (16) du composant de transfert (2) lorsque le levier d'actionnement (1) est transféré dans la deuxième voie de changement de vitesses et **en ce que** le moyen d'arrêt (11) ne vient pas en prise dans le logement d'arrêt (16) lorsque le levier d'actionnement (1) est transféré dans la première voie de changement de vitesses.

7. Dispositif de changement de vitesses selon l'une quelconque des revendications 1 à 6, **caractérisé en ce que**
a. une extrémité (13) du moyen d'arrêt (11) est disposée fixement en le composant de transfert (2), tandis qu'une extrémité opposée (14) du moyen d'arrêt (11) est prévue pour venir en prise dans un logement d'arrêt (16) d'un cadre de changement de vitesses (10) ou d'un boîtier de changement de vitesses - de préférence disposé ou pouvant être disposé fixement dans un véhicule automobile ou **en ce que**
b. une extrémité (13) du moyen d'arrêt (11) est disposée fixement sur un cadre de changement de vitesses ou un boîtier de changement de vitesses - disposé ou pouvant être disposé de préférence fixement dans un véhicule automobile, tandis qu'une extrémité opposée (14) du moyen d'arrêt (11) est prévue pour venir en prise dans un logement d'arrêt (16) du composant de transfert (2).

8. Dispositif de changement de vitesses selon l'une quelconque des revendications 1 à 7, **caractérisé en ce que**
a. le composant de transfert (2) est disposé de manière pivotante pour actionner le câble de changement de vitesses ou la tringlerie de changement de vitesses, en particulier avec le levier d'actionnement (1), ou **en ce que**
b. le composant de transfert (2) est disposé de manière déplaçable linéairement pour actionner le câble de changement de vitesses ou la tringlerie de changement de vitesses, en particulier avec le levier d'actionnement (1).

9. Dispositif de changement de vitesses selon l'une quelconque des revendications 1 à 8, **caractérisé en ce que** le levier d'actionnement (1), pour la sélection d'une parmi plusieurs positions de changement de vitesses, en particulier l'une des positions de changement de vitesses R, D, N, P, peut être pivoté dans la première voie de changement de vitesses autour d'un premier axe de pivotement (3) et/ou **en ce que** le levier d'actionnement (1) peut être pivoté dans la deuxième voie de changement de vitesses, en particulier pour sélectionner "+" pour passer à la vitesse supérieure ou pour sélectionner "-" pour passer à la vitesse inférieure, autour d'un deuxième axe de pivotement (3) notamment parallèle et/ou coaxial au premier axe de pivotement (3).

10. Dispositif de changement de vitesses selon la revendication 9, **caractérisé en ce que**
a. le levier d'actionnement (1) peut être pivoté autour d'un axe de transfert (5) pour le transfert d'une voie de changement de vitesses dans l'autre voie de changement de vitesses, lequel axe de transfert est disposé perpendiculairement à un plan dans lequel est disposé le premier axe de pivotement (3) et/ou le deuxième axe de pivotement (3), et/ou **en ce que**
b. le levier d'actionnement (1) peut être pivoté autour d'un axe de transfert (5) pour le transfert d'une voie de changement de vitesses dans l'autre voie de changement de vitesses, lequel axe de transfert est disposé perpendiculairement à un plan dans lequel est disposé le premier axe de pivotement (3) et/ou le deuxième axe de pivotement (3), le levier d'actionnement commandant le moyen d'arrêt lorsque qu'il est pivoté autour de l'axe de transfert (5), et/ou **en ce que**
c. le levier d'actionnement (1) peut être pivoté autour d'un axe de transfert (5) pour le transfert d'une voie de changement de vitesses dans une autre voie de changement de vitesses, lequel axe de transfert est disposé en biais par rapport au premier axe de pivotement (3) et/ou au deuxième axe de pivotement (3).

11. Dispositif de changement de vitesses selon l'une quelconque des revendications 1 à 10, **caractérisé en ce que**
a. le levier d'actionnement (1) présente au moins une saillie (6) qui vient en prise dans un évidement (9) du composant de transfert (2), lorsque le levier d'actionnement (1) est transféré dans la première voie de changement de vitesses et qui est disposée à l'extérieur de l'évidement (9) lorsqu'il est transféré dans la deuxième voie de changement de vitesses et/ou
b. le composant de transfert (2) présente au moins une saillie (6) qui vient en prise dans un évidement (9) du levier d'actionnement (1) lorsque le levier d'actionnement (1) est transféré dans la première voie de changement de vitesses et qui est disposée à l'extérieur de l'évidement (9) lorsque le levier d'actionnement (1) est transféré dans la deuxième voie de changement de vitesses.

12. Dispositif de changement de vitesses selon la revendication 1 à 11, **caractérisé en ce que** le composant de transfert (2) et le levier d'actionnement (1) - au moins lorsque le levier d'actionnement (1) est transféré dans la première voie de changement de vitesses - sont supportés de manière à pouvoir pivoter autour du même axe de pivotement (3) et/ou **en ce que** le composant de transfert et le levier d'actionnement (1) - au moins lorsque le levier d'actionnement (1) est transféré dans la première voie de changement de vitesses - sont supportés de manière à pouvoir pivoter autour d'axes de pivotement (3) parallèles l'un à l'autre.

13. Dispositif de changement de vitesses selon l'une quelconque des revendications 1 à 12, **caractérisé en ce qu'**un support sur palier pivotant du composant de transfert (2) sert en outre également de support sur palier pivotant pour le levier d'actionnement (1), au moins lorsque celui-ci est transféré dans la première voie de changement de vitesses.

14. Dispositif de changement de vitesses selon l'une quelconque des revendications 1 à 13, **caractérisé en ce que** le composant de transfert (2) présente un premier bras pivotant (17) et un deuxième bras pivotant (18) et/ou **en ce que** le composant de transfert (2) présente un premier bras pivotant (17) et un deuxième bras pivotant (18), le levier d'actionnement (1) étant disposé entre le premier bras pivotant (17) et le deuxième bras pivotant (18) et/ou **en ce que** le composant de transfert (2) présente un premier bras pivotant (17) et un deuxième bras pivotant (18), qui sont connectés fixement l'un à l'autre moyen d'une pièce de connexion.

15. Dispositif de changement de vitesses selon l'une quelconque des revendications 1 à 14, **caractérisé en ce que** le composant de transfert (2) est supporté de manière à pouvoir pivoter par rapport à au moins une paroi d'un boîtier de changement de vitesses - disposé ou pouvant être disposé de préférence fixement dans un véhicule automobile - et peut être déplacé à l'encontre de la force d'au moins un élément de ressort par rapport à l'au moins une paroi.

16. Dispositif de changement de vitesses selon l'une quelconque des revendications 1 à 15, **caractérisé en ce que** la mobilité, en particulier la capacité de pivotement du composant de transfert (2) est bloquée lorsque le levier d'actionnement (1) est transféré dans la deuxième voie de changement de vitesses et **en ce que** la mobilité, en particulier la capacité de pivotement du composant de transfert (2) est permise lorsque le levier d'actionnement est transféré dans la première voie de changement de vitesses.

17. Dispositif de changement de vitesses selon l'une quelconque des revendications 1 à 16, **caractérisé en ce qu'**un câble de changement de vitesses ou une tringlerie de changement de vitesses est fixé(e) sur le composant de transfert (2).

18. Boîte de vitesses, en particulier boîte de vitesses automatiques d'un véhicule automobile et/ou véhicule automobile comprenant un dispositif de changement de vitesses selon l'une quelconque des revendications 1 à 17.
